(19) Europäisches Patentamt
European Patent Office
Office européen des brevets

(11) **EP 1 086 832 B1**

(12) **EUROPÄISCHE PATENTSCHRIFT**

(45) Veröffentlichungstag und Bekanntmachung des Hinweises auf die Patenterteilung:
**26.01.2005 Patentblatt 2005/04**

(51) Int Cl.$^7$: **B60C 11/00**, B60C 11/01

(21) Anmeldenummer: **00120690.3**

(22) Anmeldetag: **22.09.2000**

(54) **Fahrzeugluftreifen**

Vehicle pneumatic tyre

Bandage pneumatique pour véhicule

(84) Benannte Vertragsstaaten:
**DE ES FR GB IT PT**

(30) Priorität: **24.09.1999 DE 19945774**

(43) Veröffentlichungstag der Anmeldung:
**28.03.2001 Patentblatt 2001/13**

(73) Patentinhaber: **Continental Aktiengesellschaft**
**30165 Hannover (DE)**

(72) Erfinder:
• **Sommer, Jürgen**
**30900 Wedemark (DE)**

• **Meyer, Andreas**
**30823 Garbsen (DE)**
• **Hübner, Felix**
**31275 Lehrte (DE)**

(56) Entgegenhaltungen:
**EP-A- 0 739 759     EP-A- 0 790 142**
**EP-A- 0 914 973**

• **PATENT ABSTRACTS OF JAPAN vol. 1999, no. 04, 30. April 1999 (1999-04-30) -& JP 11 001103 A (SUMITOMO RUBBER IND LTD), 6. Januar 1999 (1999-01-06)**

**Beschreibung**

Die Erfindung betrifft einen Fahrzeugluftreifen in Radialbauart mit einem Laufstreifen, welcher eine als Laufstreifenbreite TW definierte Breite aufweist, die seiner maximalen Breite in der Bodenaufstandfläche bei montiertem, belastetem und unter Innendruck gesetztem Reifen entspricht, wobei, im Querschnitt betrachtet, die Außenkontur des Laufstreifens über seine Breite TW vier unterschiedliche Radien aufweist, von welchen der erste Radius TR1 über einen Bereich, der den Reifenzenit einschließt, verläuft, wobei an diesem Bereich beidseitig jeweils ein Bereich mit einem Radius TR2 anschließt, wobei an diese Bereiche jeweils ein Bereich mit einem Radius TRA anschließt, welcher kleiner ist als der Radius TR1 des den Reifenzenit einschließenden Bereichs, und wobei die durch die Laufstreifenbreite TW definierten Laufstreifenränder jeweils in einem Bereich mit dem vierten Radius, einem im Übergangsbereich zu den in den Reifenseitenwänden vorgesehenen Schulterradien, verlaufen.

Es ist bekannt, dass Reifen, deren Außenkontur im Laufstreifenbereich mit einem einzigen Radius ausgelegt sind, insbesondere dann, wenn diese Reifen mit einem niedrigen Querschnitt versehen werden, eine ungleichmäßige Druckverteilung in der Bodenaufstandsfläche aufweisen. Vor allem ist bei derartigen Reifen oft der Kontaktdruck in den Schulterbereichen erhöht. Dieser erhöhte Kontaktdruck in den Schulterbereichen wirkt sich nun nicht nur nachteilig auf das Abrollgeräusch sondern auch auf andere Reifeneigenschaften, wie das Bremsverhalten, die Haltbarkeit bei höheren Geschwindigkeiten, den Rollwiderstand und die Aquaplaningeigenschaften aus.

Um dieses Problem zu lösen, wurde bereits vorgeschlagen, die Außenkontur des Reifens im Bereich des Laufstreifens mit mehreren unterschiedlichen Radien zu versehen. Bekannt ist beispielsweise, zwei unterschiedliche Radien vorzusehen, wobei der eine über einen Bereich der Breite des Laufstreifens, der den Reifenzenit einschließt verläuft, und an diesen beidseitig anschließend zu den Schulterbereichen des Reifens Bereiche mit dem zweiten Radius vorgesehen sind. Eine Anzahl von Patentanmeldungen befasst sich mit der Optimierung einer derartigen 2-Radien-Kontur. Diesbezüglich wird beispielsweise auf die EP-A 0 269 301 verwiesen, wo vorgeschlagen ist, die Größe der Radien zur maximalen Querschnittsbreite des Reifens in Beziehung zu setzen. Der eine, den Reifenzenit einschließende Bereich der Außenkontur wird dabei mit einem Radius versehen, der zwischen dem 1,5- bis 2,5-fachen der maximalen Breite des auf eine Felge montierten und unter Innendruck gesetzten Reifens gewählt wird, der zweite Radius soll größer sein als der erste Radius, insbesondere das 1,5 bis 2,5-fache des ersten Radius betragen.

Auch die EP-B 0 323 519 befasst sich mit einer Vergleichmäßigung des Kontaktdruckes des Reifens in der Bodenaufstandsfläche, um einen ungleichmäßigen Abrieb zu verhindern und den Naßgriff sowie den Fahrkomfort zu verbessern. Auch in diesem Patent wird dazu eine 2-Radien-Kontur für die Außenkontur des Laufstreifens gewählt und die Anordnung der Seitenwände in bestimmte Beziehungen zu den Verhältnissen zwischen den Laufflächenradien und der maximalen Reifenbreite gesetzt.

Ein Fahrzeugluftreifen, dessen Außenkontur mit Bereichen mit drei unterschiedlichen Radien gestaltet ist, ist aus der EP-A 0 850 788 bekannt. Hier geht es neben einer Optimierung der Gürtellagen zur Reduzierung des Reifengewichtes darum, die Hochgeschwindigkeitshaltbarkeit, das Fahrverhalten und den Fahrkomfort eines Reifens zu verbessern. Dazu wird die Reifenaußenkontur im Laufstreifenbereich mit drei unterschiedlichen Radien ausgelegt und mit einer unterschiedlichen Anzahl von Gürtellagen kombiniert.

Einen Fahrzeugluftreifen gemäß dem Oberbegriff des Anspruches 1 offenbart die EP-A-0 739 759. Hier soll eine speziell ausgelegte Mehr-Radien-Kontur vor allem eine Vergleichmäßigung des Laufstreifenabriebes bewirken.

Mit einer Mehr-Radien-Konturen, wie bislang bekannt, lassen sich zwar gewisse Verbesserungen der Druckverteilung in der Bodenaufstandsfläche erzielen, es ist jedoch selbst bei gegenseitiger Optimierung diverser Parameter, die Druckverteilung im Bodenaufstandsbereich des Reifens nicht im erwünschten Ausmaß und nicht in der erwünschten Art und Weise beeinflußbar.

Der Erfindung liegt somit die Aufgabe zu Grunde, bei einem Reifen der eingangs genannten Art durch eine Optimierung der Auslegung der Außenkontur des Laufstreifenbereichs die Möglichkeit zu eröffnen, die Druckverteilung in der Bodenaufstandsfläche besser als bisher steuern zu können, um gezielt auf bestimmte Eigenschaften des Reifens, wie Bremsverhalten, Handling, Geräuschentwicklung etc., Einfluss nehmen zu können.

Gelöst wird die gestellte Aufgabe erfindungsgemäß dadurch, dass der Radius TR2 kleiner ist als der Radius TR1 und die Größe des Radius TRA gemäß der Beziehung

$$0,15 \ TR1 \leq TRA \leq 0,65 \ TR1$$

ermittelt ist,
und dass TR2 < TRA und die Größe von TR2 durch die Beziehung

$$0,05 \ TR1 \leq TR2 \leq 0,6 \ TR1$$

ermittelt ist.

Gemäß der gegenständlichen Erfindung wird somit die Außenkontur des Laufstreifens so ausgelegt, dass sie sich aus Bereichen mit vier verschiedenen Radien zusammensetzt. Dies erlaubt grundsätzlich eine wesentlich bessere Einflußnahme auf die Druckverteilung in der Bodenaufstandfläche des Reifens. Wie sich herausgestellt hat, ist für eine Vergleichmäßigung der Druckverteilung auch das Verhältnis der Größen der einzelnen Radien zueinander von Bedeutung, insbesondere die oben erwähnte Beziehung zwischen dem Radius in jenem Bereich, der den Reifenzenit einschließt, zu dem Radius der radial äußersten Bereiche. Gerade die Größe des letzteren Radius ermöglicht es, auf das Volumen im Schulterbereich außerhalb der Aufstandsfläche Einfluß zu nehmen. So wird durch einen vergleichsweise großen Radius in diesen Bereichen eine Verringerung des Volumens in den Schulterbereichen außerhalb der Aufstandsfläche erreicht. Die derart erzielte rundere dynamische Kontur bewirkt eine geringere Temperaturentwicklung im Reifen und somit eine verbesserte Hochgeschwindigkeitshaltbarkeit. Die erzielbare gleichmäßige Druckverteilung hat positive Auswirkungen auf verschiedene Reifeneigenschaften, wie das Bremsverhalten, das Handling und die Geräuschentwicklung.

In vielen Fällen der strukturellen Auslegung eines erfindungsgemäßen Reifens ist zudem eine gleichmäßige Druckverteilung in der Bodenaufstandsfläche dann erzielbar, wenn TR2<TRA.

Für die erwünschte Eigenschaftsverbesserung bzw. das Ausmaß der Beeinflussung auf die Druckverteilung in der Bodenaufstandsfläche des Reifens ist von Bedeutung, wie die Größe der einzelnen Radien ermittelt bzw. gewählt wird. Insbesondere sollte TR1 gemäß der Beziehung

$$3\ TW \leq TR1 \leq 25\ TW,\ \text{insbesondere}\ 3TW \leq TR1 \leq 6TW$$

ermittelt werden.

Eine gewisse Bedeutung kommt auch der Breite der Bereiche mit den drei unterschiedlichen Radien zu. Diesbezüglich ist es günstig, wenn der den Reifenzenit einschließende Bereich mit dem Radius TR1, welcher Bereich durch einen Abstand TW1 zwischen zwei symmetrisch zum Reifenzenit verlaufenden Stellen bestimmt ist, so ausgelegt wird, dass TW1 die Beziehung

$$0,1\ TW \leq TW1 \leq 0,7\ TW$$

erfüllt.

Der an den Reifenzenit anschließende Bereich mit dem Radius TR2 reicht insbesondere bis zu zwei symmetrisch zum Reifenzenit verlaufenden Stellen in der Außenkontur, deren gegenseitiger Abstand TW2 gemäß der Beziehung

$$0,15\ TW \leq TW2 \leq 0,9\ TW$$

bestimmt wird.

Der Übergang zum Schulterradius erfolgt insbesondere jeweils in einem Abstand RA von den Laufstreifenrändern, der zwischen 1,5 und 14%, insbesondere zwischen 3 und 10%, der Laufstreifenbreite TW beträgt.

Weitere Merkmale, Vorteile und Einzelheiten der Erfindung werden nun anhand der Zeichnung näher beschrieben. Die beiden Zeichnungsfiguren sind dabei schematische Darstellungen, wobei

Fig. 1 einen Querschnitt durch einen gemäß der Erfindung ausgeführten Fahrzeugluftreifen und

Fig. 2 lediglich den Verlauf der Außenkontur und den Verlauf der Unterzugskontur des Reifens aus Fig. 1 darstellt.

Das dargestellte und beschriebene Ausführungsbeispiel bezieht sich auf einen Reifen für einen Personenkraftwagen. Die Erfindung ist jedoch auf diesen Reifentyp nicht eingeschränkt und kann gleichermaßen bei anderen Reifentypen, beispielsweise bei LKW-Reifen, angewendet werden.

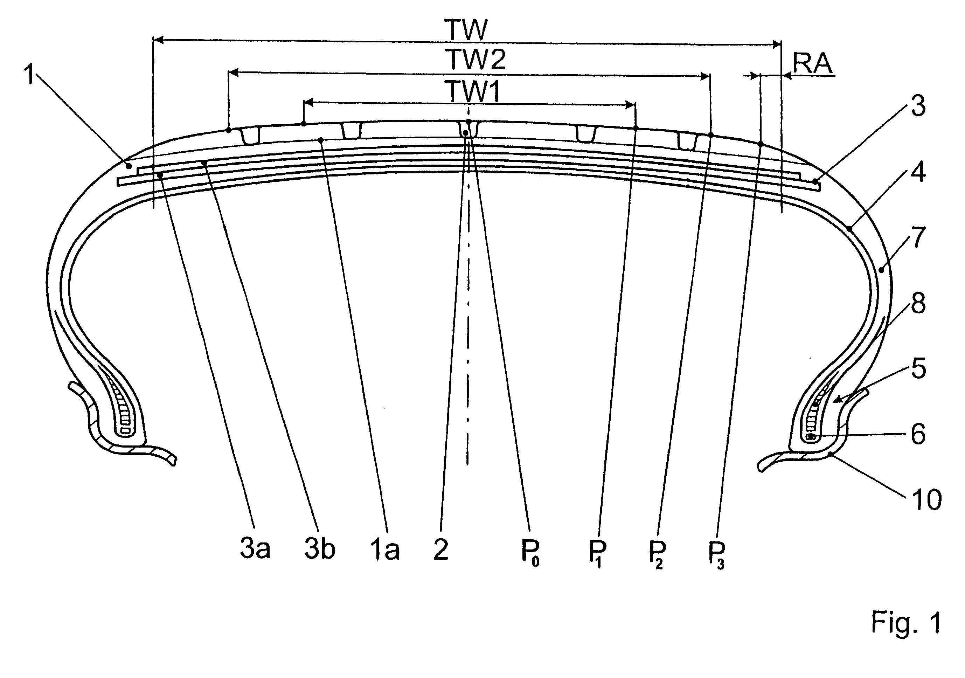

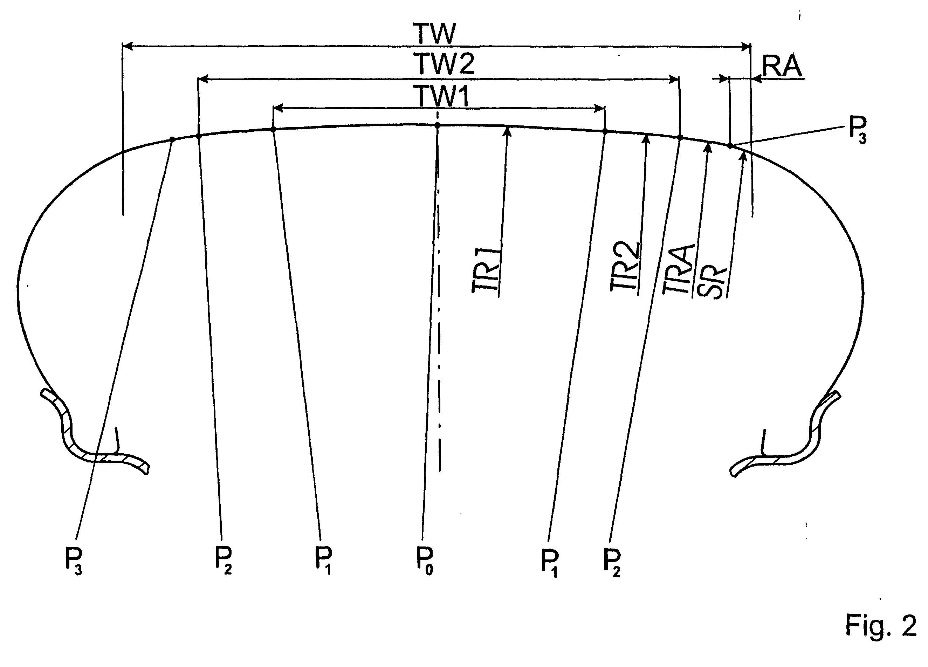

Der in Fig. 1 dargestellte Fahrzeugluftreifen ist auf einer lediglich angedeuteten Felge 10 montiert und umfasst einen Laufstreifen 1, welcher mit einer Laufstreifenprofilierung, von der hier Umfangsnuten 2 dargestellt sind, versehen ist. Der Laufstreifen 1 verläuft seitlich in die Schulterbereiche des Reifens hinein und ist somit breiter als die in Fig. 1 eingezeichnete Laufstreifenbreite TW. Die Laufstreifenbreite TW ist die größte Breite des Reifenabdruckes (auch Latsch genannt) am Untergrund, wenn der Reifen auf einer für ihn spezifizierten Felge aufgezogen und unter Nenndruck und Nennlast gesetzt ist. Die dargestellten Umfangsnuten 2 reichen bis auf die vorgesehene maximale Profiltiefe, die im Allgemeinen 7 bis 8 mm gewählt wird. Dabei können auch weitere Profilstrukturen, beispielsweise in Querrichtung verlaufende Nuten, vorgesehen werden, die mit Ausnahme eines flacher werdenden Verlaufes in den Schulterbereichen, meist bis auf die maximale Profiltiefe reichen. Der Nutgrund dieser Profilstrukturen ist über den Reifenumfang von einer Einhüllenden begrenzt, von der in Fig. 1 und in Fig. 2 die Schnittkontur, die mit 1a beziffert ist und als Unterzugskontur bezeichnet wird, dargestellt ist.

Radial innerhalb des Laufstreifens 1 ist ein Gürtelverband 3 vorgesehen, der bei der in Fig. 1 gezeigten Ausführungsform zwei Gürtellagen 3a, 3b aufweist, von welchen die radial weiter innen gelegene Gürtellage 3b breiter ausgeführt ist. Die beiden Gürtellagen 3a, 3b können in herkömmlicher Art und Weise aufgebaut sein, beispielsweise aus in eine Gummimatrix eingebettete und innerhalb jeder Lage jeweils parallel zueinander verlaufenden Stahlkorden bestehen. Die gegenseitige Anordnung der beiden Gürtellagen 3a, 3b bzw. der Stahlkorde in den Gürtellagen 3a, 3b erfolgt üblicherweise derart, dass zwischen den Stahlkorden der einen Lage und den Stahlkorden der zweiten Lage eine gekreuzte Anordnung vorliegt.

Der in Fig. 1 beispielhaft dargestellte Reifen ist ferner mit einer einlagig ausgeführten Radialkarkasse 4 versehen, die in den beiden Wulstbereichen 5 von innen nach außen über Wulstkerne 6 verläuft und wieder zurück in die Seitenwände 7 reicht, wo die Karkasse 4 in den Seitenwänden 7 jeweils in einem Abstand von den oberen Endbereichen von Kernprofilen 8 endet.

Gemäß der gegenständlichen Erfindung ist die Außenkontur des Reifens im Laufstreifenbereich speziell ausgelegt, um insbesondere eine zumindest weitgehend gleichmäßige Druckverteilung in der Bodenaufstandsfläche des Reifens zu erzielen. Dazu umfasst die Außenkontur Bereiche mit drei unterschiedlichen Radien TR1, TR2 und TRA.

Wie Fig. 1 in Verbindung mit Fig. 2 zeigt, weist der auf die Feige 10 aufgezogene und unter Innendruck gesetzte Reifen im Laufstreifenbereich einen den Reifenzenit, welcher in den Zeichnungsfiguren durch den Punkt $P_0$ gekennzeichnet ist, einschließenden Bereich mit einem Radius TR1 auf. Dieser Bereich erstreckt sich beidseitig von $P_0$ bis zu Punkten $P_1$, die symmetrisch zu $P_0$ liegen. Der Radius TR1 verläuft dabei über einen Bereich der Außenkontur des Laufstreifens, welcher Bereich durch den Abstand TW1 zwischen den beiden Punkten $P_1$ definiert ist. Für TW1 gilt die Beziehung

$$(1) \qquad 0,1 \ TW \leq TW1 \leq 0,7 \ TW.$$

Die Bereiche mit dem zweiten Radius TR2 schließen beidseitig an den Bereich mit dem Radius TR1 an, wobei die Übergänge nicht abrupt sondern leicht fließend gewählt werden. Die Bereiche der Außenkontur mit dem Radius TR2 verlaufen jeweils zwischen den Punkten $P_1$ und Punkten $P_2$. Die Größe des Abstandes TW2 der beiden Punkte $P_2$ wird gemäß der Beziehung

$$(1) \qquad 0,15 \ TW \leq TW2 \leq 0,9 \ TW$$

gewählt.

Der Bereich mit dem dritten Radius TRA befindet sich jeweils zwischen den Punkten $P_2$ und je einem weiteren Punkt $P_3$, welcher in der Außenkontur des Laufstreifens den Übergang zu einem Schulterradius SR definiert. Die Lage der Punkte $P_3$ ist hier etwas axial innerhalb der größten Laufstreifenbreite TW, und zwar in der einem Abstand RA von 1,5 bis 14%, insbesondere 3 bis 10 %, der Laufstreifenbreite TW.

Von besonderer Bedeutung zur Erzielung einer gleichmäßigen Druckverteilung in der Bodenaufstandfläche des Reifens ist das gegenseitige Verhältnis der Größen der Radien TR1, TR2 und TRA. Insbesondere gilt, dass

$$TR1 > TR2 \ und \ TRA < TR1.$$

Der Wert von TR1 wird durch die Beziehung

$$(2) \qquad 3 \ TW \leq TR1 \leq 25 \ TW, \ insbesondere \ 3 \ TW \leq TR1 \leq 6 \ TW,$$

bestimmt. Für die Bestimmung des Wertes von TRA wird die Beziehung

$$(3) \qquad 0,15 \ TR1 \leq TRA \leq 0,65 \ TR1,$$

herangezogen. Die Größe von TR2 ist von den jeweiligen sonstigen Konturvorgaben und dem strukturellen Aufbau des Reifens abhängig, wobei der Standardfall jener ist, bei dem

$$TR2<TRA \text{ und } TR2<TR1,$$

wobei die Größe von TR2 durch die Beziehung

$$(5) \qquad 0{,}05 \text{ } TR1 \leq TR2 \leq 0{,}6 \text{ } TR1$$

bestimmbar ist.

Bei bestimmten Vorgaben ist es zur Erzielung einer optimalen Verminderung des Druckes in den Schulterbereichen von Vorteil, wenn

$$TR2>TRA$$

und die Größe von TR2 gemäß der Beziehung

$$(6) \qquad 0{,}1 \text{ } TR1 \leq TR2 \leq 0{,}95 \text{ } TR1, \text{ insbesondere } 0{,}6 \text{ } TR1 \leq TR2 \leq 0{,}95 \text{ } TR1,$$

gewählt wird.

In jedem Fall wird die Außenkontur so ausgelegt, dass TRA<TR1 gilt. Um den Druck in den Schulterbereichen zur Erzielung einer gleichmäßigen Druckverteilung herabzusetzen, wird TRA jedoch vergleichsweise groß gewählt, so dass das Positivvolumen des Laufstreifens in den Schulterbereichen auch außerhalb der durch TW bestimmten Fahrfläche verringert wird. Die gemäß der gegenständlichen Erfindung erreichbare rundere dynamische Kontur des Laufstreifens hat auch eine geringere Temperaturentwicklung während des Abrollens des Reifens zur Folge. Durch den reduzierten Schulterdruck verbessern sich die Hochgeschwindigkeitshaltbarkeit und auch die Dauerhaltbarkeit des Reifens. Wie schon vielfach erwähnt wird durch eine gemäß der gegenständlichen Erfindung durchgeführte Auslegung der Außenkontur eine gleichmäßige Druckverteilung in der Bodenaufstandsfläche des Reifens erzielt. Gerade eine gleichmäßige Druckverteilung hat positive Auswirkungen auf das Bremsverhalten, das Handlingverhalten und auch auf die Geräuschentwicklung während des Abrollens.

Gemäß der gegenständliche Entwicklung ausgelegte Außenkonturen können auch mehr als drei unterschiedliche Radien umfassen, wobei dann in den einzelnen obigen Beziehungen TRA jener Radius ist, der die Kontur der beiden axial äußersten Bereiche bestimmt. So kann sich beispielsweise eine Außenkontur aus Bereichen mit vier unterschiedlichen Radien zusammensetzen.

Die erwünschte, erfindungsgemäße Außenkontur wird dem Reifen über eine entsprechende Auslegung der Innenkontur der den Laufstreifenbereich formenden Segmente der Vulkanisationsform vermittelt. Der vulkanisierte, auf einer Felge montierte und unter spezifiziertem Innendruck gesetzte Reifen besitzt eine übereinstimmende bzw. zumindest im Wesentlichen übereinstimmende Außenkontur.

**Patentansprüche**

1. Fahrzeugluftreifen in Radialbauart mit einem Laufstreifen, welcher eine als Laufstreifenbreite TW definierte Breite aufweist, die seiner maximalen Breite in der Bodenaufstandfläche bei montiertem, belastetem und unter Innendruck gesetztem Reifen entspricht, wobei, im Querschnitt betrachtet, die Außenkontur des Laufstreifens über seine Breite TW vier unterschiedliche Radien aufweist, von welchen der erste Radius TR1 über einen Bereich, der den Reifenzenit einschließt, verläuft, wobei an diesem Bereich beidseitig jeweils ein Bereich mit einem Radius TR2 anschließt, wobei an diese Bereiche jeweils ein Bereich mit einem Radius TRA anschließt, welcher kleiner ist als der Radius TR1 des den Reifenzenit einschließenden Bereichs, und wobei die durch die Laufstreifenbreite TW definierten Laufstreifenränder jeweils in einem Bereich mit dem vierten Radius, einem im Übergangsbereich zu den in den Reifenseitenwänden vorgesehenen Schulterradien, verlaufen,
**dadurch gekennzeichnet,**
**dass** der Radius TR2 kleiner ist als der Radius TR1 und die Größe des Radius TRA gemäß der Beziehung $0{,}15 \text{ } TR1 \leq TRA \leq 0{,}65 \text{ } TR1$ ermittelt ist,

und **dass** TR2 < TRA und die Größe von TR2 durch die Beziehung
0,05 TR1≤TR2≤0,6 TR1
ermittelt ist.

2. Fahrzeugluftreifen nach Anspruch 1, **dadurch gekennzeichnet, dass** die Größe von TR1 gemäß der Beziehung 3 TW≤TR1≤25 TW, insbesondere gemäß der Beziehung ermittelt ist.

3. Fahrzeugluftreifen nach Anspruch 1 oder 2, **dadurch gekennzeichnet, dass** der den Reifenzenit einschließende Bereich mit dem Radius TR1 durch einen Abstand TW1 zwischen zwei symmetrisch zum Reifenzenit verlaufenden Stellen bestimmt ist, wobei die Größe von TW1 gemäß der Beziehung
0,1 TW≤TW1≤0,7 TW
ermittelt ist.

4. Fahrzeugluftreifen nach einem der Ansprüche 1 bis 3, **dadurch gekennzeichnet, dass** jeder Bereich mit dem Radius TR2 bis zu zwei symmetrisch zum Reifenzenit verlaufenden Stellen in der Außenkontur reicht, deren gegenseitiger Abstand TW2 gemäß der Beziehung
0,15 TW≤TW2≤0,9 TW
ermittelt ist.

5. Fahrzeugluftreifen nach einem der Ansprüche 1 bis 4, **dadurch gekennzeichnet, dass** der Übergang zum Schulterradius jeweils in einem Abstand RA von den Lautstreifenrändem erfolgt, der 1,5 bis 14%, insbesondere 3 bis 10%, der Laufstreifenbreite TW beträgt.

**Claims**

1. Pneumatic vehicle tyre of a radial type with a tread rubber, which has a width defined as the tread rubber width TW, which corresponds to its maximum width in the ground contact area when the tyre is fitted, subjected to loading and put under internal pressure, the outer contour of the tread rubber having, when seen in cross section, four different radii over its width TW, of which the first radius TR1 runs over a region which includes the tyre crown, this region being adjoined on each of both sides by a region with a radius TR2, these regions respectively being adjoined by a region with a radius TRA, which is smaller than the radius TR1 of the region including the tyre crown, and the edges of the tread rubber that are defined by the tread rubber width TW respectively running in a region with the fourth radius, in the transitional region to the shoulder radii provided in the tyre sidewalls, **characterized in that** the radius TR2 is smaller than the radius TR1 and the size of the radius TRA is determined according to the relationship
0.15 TR1 ≤ TRA ≤ 0.65 TR1,
and **in that** TR2 < TRA and the size of TR2 is determined according to the relationship
0.05 TR1 ≤ TR2 ≤ 0.6 TR1.

2. Pneumatic vehicle tyre according to Claim 1,
**characterized in that** the size of TR1 is determined according to the relationship
3 TW ≤ TR1 ≤ 25 TW, in particular according to the relationship
3 TW ≤ TR1 ≤ 6 TW.

3. Pneumatic vehicle tyre according to Claim 1 or 2, **characterized in that** the region including the tyre crown with the radius TR1 is determined by a spacing TW1 between two locations running symmetrically in relation to the tyre crown, the size of TW1 being determined according to the relationship
0.1 TW ≤ TW1 ≤ 0.7 TW.

4. Pneumatic vehicle tyre according to one of Claims 1 to 3, **characterized in that** each region with the radius TR2 reaches as far as two locations running symmetrically in relation to the tyre crown in the outer contour, the spacing TW2 between which is determined according to the relationship
0.15 TW ≤ TW2 ≤ 0.9 TW.

5. Pneumatic vehicle tyre according to one of Claims 1 to 4, **characterized in that** the transition to the shoulder radius respectively takes place at a distance RA from the edges of the tread rubber which is 1.5 to 14%, in particular 3 to 10%, of the tread rubber width TW.

# EP 1 086 832 B1

**Revendications**

1. Bandage pneumatique pour véhicule de construction radiale avec une bande de roulement qui présente une largeur définie comme largeur de bande de roulement TW, qui correspond à sa largeur maximale dans la surface d'appui au sol lorsque le pneu est monté, chargé et sous pression interne, le contour extérieur de la bande de roulement, vu en section transversale, présentant quatre rayons différents sur sa largeur TW, dont le premier rayon TR1 s'étend sur une région qui inclut le zénith du pneu, une région se raccordant à chaque fois de part et d'autre à cette région, avec un rayon TR2, une région se raccordant à chaque fois à cette région avec un rayon TRA, qui est inférieur au rayon TR1 de la région incluant le zénith du pneu, et les bords de la bande de roulement définis par la largeur de la bande de roulement TW s'étendant à chaque fois dans une région ayant le quatrième rayon, un rayon dans la région de transition aux rayons d'épaulement prévus dans les parois latérales du pneu, **caractérisé en ce que**
le rayon TR2 est inférieur au rayon TR1 et la valeur du rayon TRA est déterminée en fonction de la relation
$0,15\ TR1 \leq TRA \leq 0,65\ TR1$
et **en ce que** TR2 < TRA et la valeur de TR2 est déterminée par la relation
$0,05\ TR1 \leq TR2 \leq 0,6\ TR1$.

2. Bandage pneumatique pour véhicule selon la revendication 1, **caractérisé en ce que** la valeur de TR1 est déterminée en fonction de la relation $3\ TW \leq TR1 \leq 25\ TW$, notamment en fonction de la relation
$3\ TW \leq TR1 \leq 6\ TW$.

3. Bandage pneumatique pour véhicule selon la revendication 1 ou 2, **caractérisé en ce que** la région de rayon TR1 incluant le zénith du pneu est déterminée par une distance TW1 entre deux points s'étendant symétriquement par rapport au zénith du pneu, la valeur de TW1 étant déterminée en fonction de la relation
$0,1\ TW \leq TW1 \leq 0,7\ TW$.

4. Bandage pneumatique pour véhicule selon l'une quelconque des revendications 1 à 3, **caractérisé en ce que** chaque région de rayon TR2 s'étend jusqu'à deux points du contour extérieur s'étendant symétriquement par rapport au zénith du pneu, dont la distance TW2 mutuelle est déterminée en fonction de la relation
$0,15\ TW \leq TW2 \leq 0,9\ TW$.

5. Bandage pneumatique pour véhicule selon l'une quelconque des revendications 1 à 4, **caractérisé en ce que** la transition au rayon d'épaulement s'effectue à chaque fois à une distance RA des bords de la bande de roulement, qui vaut de 1,5 à 14%, notamment de 3 à 10% de la largeur de la bande de roulement TW.

TW

TW2

TW1

RA

1

3

4

7

8

5

6

10

3a  3b  1a  2  $P_0$  $P_1$  $P_2$  $P_3$

EP 1 086 832 B1

Fig. 1

Fig. 2